# EUROPEAN PATENT APPLICATION

(11) **EP 4 685 956 A1**
(43) Date of publication of application: **28.01.2026**
(21) Application number: 24382810.0
(22) Date of filing: 24.07.2024
(51) Int. Cl.: H01M 50/242, H01M 50/291, H01M 50/293, H01M 10/04, H01M 50/209, H01M 50/211

(54) **PRESSING DEVICE FOR A BATTERY CELL STACK**

(71) Applicant: Ikerlan, S. Coop., 20500 Mondragon (ES)
(72) Inventor: REMIREZ JAUREGUI, Adrian, 20500 Arrasate-Mondragon (ES); AVILA LIMIA, Ander, 20500 Arrasate-Mondragon (ES)
(74) Representative: Galbaian S.Coop.

(57) **Abstract**

Pressing device (1) for a battery cell stack comprising a plurality of holders (2) arranged consecutively in the stacking direction. The holders (2) move apart or move closer together with an increase or a decrease in the thickness of the battery cells (11), and are coupled together by means of joints formed by a projection (8) arranged in one of the holders (2) and a housing (7) arranged in the adjacent holder (2). The housing (7) comprises an open contour (72), and the projection (8) is housed in the housing (7). The projection (8) or the open contour (72) comprises an elastic section (21) that allows the holders (2) to move apart and to move closer together, the projections (8) and the housings (7) being configured so that the holders (2) exert a determined force on the battery cells (11) in the stacking direction.

## Description

### TECHNICAL FIELD

The present invention relates to pressing devices for battery cell stacks.

### PRIOR ART

Energy storage systems formed by a plurality of battery cells arranged adjacent to each other to form a stack are currently known. However, it is known that battery cells tend to change in thickness due to various factors such as temperature, state of charge, or ageing. It is also known to exert pressure on the battery cells forming the cell stack, since the pressure exerted on the battery cells directly influences the efficiency and degradation of the cells, so that the more homogeneous the pressure exerted on the battery cells throughout their life cycle, the better their performance and the lower their degradation.

EP3883007A1 describes a battery module comprising at least one battery cell stack and a module frame configured to receive at least one battery cell stack. The module frame comprises a structural component and a flexible component. The structural component comprises two end plates and two side plates. The flexible component comprises at least one elastic element. The elastic element is a sheet metal plate or an elastic polymer plate. When the battery cell stack is inserted into the module space, the stack compresses the elastic element.

### DISCLOSURE OF THE INVENTION

The object of the invention is to provide a pressing device as defined in the claims.

The pressing device of the invention is a pressing device for a battery cell stack comprising a plurality of prismatic or pouch-type battery cells which are arranged stacked in a stacking direction. The pressing device comprises a plurality of holders arranged consecutively in the stacking direction, such that at least one battery cell is arranged between every two holders. The holders move apart or move closer together with an increase or a decrease in the thickness of the battery cells in the stacking direction, and are coupled together by means of joints formed by a projection arranged in one of the holders and a housing arranged in the adjacent holder. The housing comprises an inlet opening and an open contour, and the projection is housed in the housing. The projection or the open contour of the housing comprises at least one elastic section that allows the holders to move apart and to move closer together. The projections and the housings are configured so that the holders exert a determined force on the battery cells in the stacking direction.

By means of the pressing device of the invention, the pressure exerted on the battery cells can be controlled, which improves their behaviour and reduces their degradation, making the battery cell stack in which it is arranged last longer and be more efficient. Furthermore, the battery resulting from arranging a pressing device such as that of the invention in a battery cell stack has a volume very similar to that of a battery without pressure compensation.

These and other advantages and features of the invention will become apparent in view of the figures and the detailed description of the invention.

### DESCRIPTION OF THE DRAWINGS

Figure 1 shows part of a first embodiment of a pressing device 1 according to the invention.
Figure 2 shows part of a second embodiment of a pressing device 1 according to the invention.
Figure 3 shows part of a third embodiment of a pressing device 1 according to the invention.
Figure 4 shows part of a fourth embodiment of a pressing device 1 according to the invention.
Figure 5 shows part of a fifth embodiment of a pressing device 1 according to the invention.
Figure 6 shows the detail of a joint of the pressing device of figure 1.

### DETAILED DISCLOSURE OF THE INVENTION

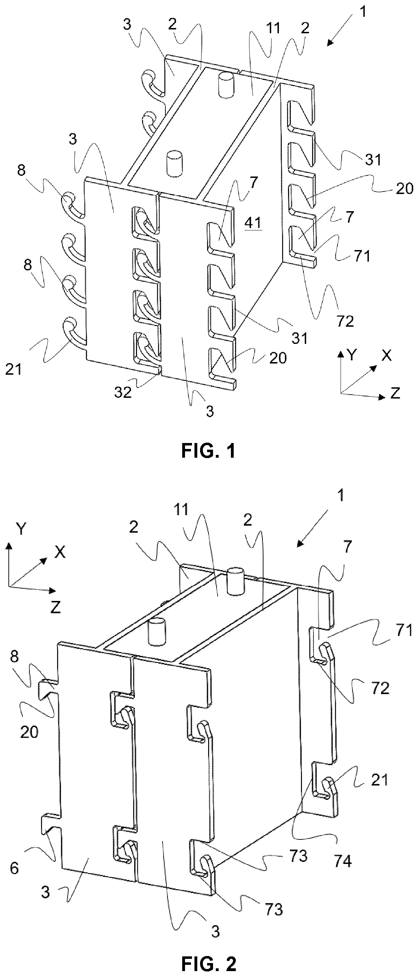

Figures 1 to 5 show part of a first, a second, a third, a fourth, and a fifth embodiment of the pressing device 1 of the invention.

The pressing device 1 of the invention is a pressing device for a battery cell stack comprising a plurality of prismatic or pouch-type battery cells 11 which are arranged stacked in a stacking direction. The pressing device 1 comprises a plurality of holders 2 arranged consecutively in the stacking direction, such that at least one battery cell 11 is arranged between every two holders 2. The holders 2 move apart or move closer together with an increase or a decrease in the thickness of the battery cells 11 in the stacking direction, the holders 2 being coupled together by means of joints formed by a projection 8 arranged in one of the holders 2 and a housing 7 arranged in the adjacent holder 2, the housing 7 comprising an inlet opening 71 and an open contour 72, and the projection 8 being housed in the housing 7. The projection 8 or the open contour 72 of the housing 7 comprises at least one elastic section 21 that allows the holders 2 to move apart and to move closer together, the projections 8 and the housings 7 being configured so that the holders 2 exert a determined force on the battery cells in the stacking direction.

When the battery cells 11 swell in a battery charging cycle or due to ageing, they increase in thickness in the stacking direction. As each battery cell 11 swells, it pushes the two holders 2 between which it is arranged in opposite directions, moving them apart, i.e. increasing the distance at which one holder 2 is arranged relative to the other. Similarly, as the thickness of each battery cell 11 decreases when the battery cell 11 is discharged, the holders 2 between which the battery cell 11 is arranged move closer together, decreasing the distance at which one holder 2 is arranged relative to the other. Both holders 2 are coupled to each other by means of joints formed by a projection 8 arranged in one of the holders 2 and a housing 7 arranged in the other holder 2, such that the projection 8 or the open contour 72 of the housing 7 comprises at least one elastic section 21 which deforms as the thickness of the battery cells 11 arranged between the two holders 2 increases or decreases, allowing them to move apart or move closer together respectively.

Figure 1 shows part of a first embodiment of the pressing device 1 of the invention. Although figure 1 shows only two holders 2 and one battery cell 11 arranged between both holders 2, the pressing device 1 is configured to have as many holders 2 as necessary, with at least one battery cell 11 arranged between each two holders 2. The battery cell 11 shown in the figure is of the prismatic type, although the embodiment of the pressing device 1 shown in figure 1 can also be used with battery cells 11 of the pouch type. The pressing device 1 of the invention is characterised by its easy adaptation to battery cell stacks with different numbers of battery cells, since for this purpose it is only necessary to increase the number of holders 2 of the pressing device 1, without having to modify any other components of the pressing device, which makes it very versatile.

Furthermore, by means of the pressing device 1 of the invention, the pressure exerted on the battery cells 11 can be controlled, which improves the behaviour of the battery cells 11 and reduces their degradation, making the battery cell stack in which it is arranged last longer and be more efficient. Furthermore, the battery resulting from the arrangement of a pressing device 1 such as that of the invention in a battery cell stack has a volume very similar to that of a battery without pressure compensation.

In one embodiment of the pressing device 1 of the invention, the open contour 72 of the housing 7 comprises a rigid track 20 and the respective projection 8 comprises the elastic section 21, the elastic section 21 being configured so that a free end thereof slides along the rigid track 20 when the holders 2 move apart or move closer together, and to deform as it slides.

In the embodiment of figure 1, at each joint between two adjacent holders 2, the open contour 72 of the housing 7 comprises the rigid track 20 and the respective projection 8 comprises the elastic section 21. In such an embodiment, each open contour 72 comprises two side sections 73 converging at the inlet opening 71, and a front section 74 between the two side sections 73, such that part of a side section 73 constitutes the rigid track 20. In the embodiment of figure 1 each projection 8 comprises a side extension 6, said side extension 6 being an arm comprising the elastic section 21. The arm comprises an end by means of which it is held attached to the holder 2, and a free end. The free end of the arm rests against the respective rigid track 20, such that when the thickness of the battery cells 11 increases in a battery cell charging cycle, for example, said free end slides along said rigid track 20 towards the inlet opening 71. At the same time, the arm deforms. In the embodiment of figure 1 the arm is a curved arm, such that as the arm deforms as the thickness of the battery cells 11 increases, the radius of curvature of the arm increases.

Similarly, when the thickness of the battery cells 11 decreases during a discharge cycle, the free end of the arm slides along the rigid track 20 in the opposite direction, progressively recovering its shape.

In the context of the invention, the rigid track 20 is configured not to deform during use of the pressing device 1 of the invention.

In another embodiment of the pressing device 1 of the invention, the open contour 72 of the housing 7 comprises the elastic section 21 and the respective projection 8 comprises the rigid track 20, the elastic section 21 being configured so that a free end thereof slides along the rigid track 20 when the holders 2 move apart or move closer together, and to deform as it slides.

Figure 2 shows part of a second embodiment of the pressing device 1 of the invention. Although figure 2 shows only two holders 2 and one battery cell 11 arranged between both holders 2, the pressing device 1 is configured to have as many holders 2 as necessary, with at least one battery cell 11 arranged between each two holders 2. The battery cell 11 shown in the figure is of the prismatic type, although the embodiment of the pressing device 1 shown in said figure can also be used with battery cells 11 of the pouch type.

In the embodiment of figure 2, at each joint between two adjacent holders 2, the open contour 72 of the housing 7 comprises the elastic section 21 and the respective projection 8 comprises the rigid track 20. In such an embodiment, each open contour 72 comprises two side sections 73 converging at the inlet opening 71, and a front section 74 between both side sections 73, such that part of a side section 73 constitutes the elastic section 21. In the embodiment of figure 2, said part of the side section 73 is a flange constituting the elastic section 21. In such an embodiment, the projection 8 comprises a side extension 6, such that said side extension 6 comprises the rigid track 20. The flange comprises an end by which it is held to the holder 2, and a free end. The free end of the flange rests against the respective rigid track 20, such that as the thickness of the battery cells 11 increases, said free end slides along the respective rigid track 20, deforming as it slides. When the thickness of the battery cells 11 decreases, the free end of the flange slides along the rigid track in the opposite direction, progressively recovering its shape.

In one embodiment of the pressing device 1, the rigid track 20 is arranged at an angle greater than 0° and less than 90° to the stacking direction, said rigid track 20 being configured to cause the deformation of the elastic section 21 when the holders 2 move apart or move closer together.

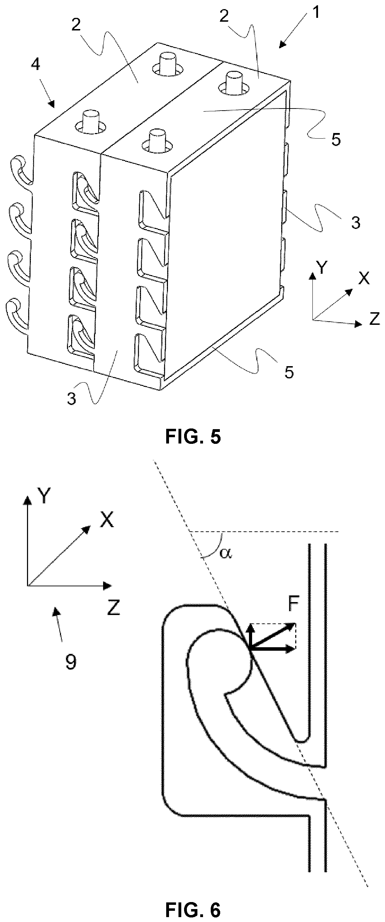

Figure 6 shows the detail of a joint between two adjacent holders of the first embodiment of the invention. In said figure, as well as in figures 1 to 5, a coordinate axis 9 whose Z direction corresponds to the stacking direction of the battery cells 11 is shown. As can be seen in figure 6, the rigid track 20 is arranged at an angle α of less than 90° with respect to the Z direction of the coordinate axis 9. This arrangement of the rigid track 20 means that when two adjacent holders 2 move apart or move closer together, the elastic section 21 deforms, thus allowing the holders 2 to move apart or move closer together. This angle is preferably in the range between 5° and 80°.

In one embodiment of the pressing device 1, the rigid track 20 and the respective elastic section 21 have a single contact point. Figure 6 shows that the rigid track 20 and the respective elastic section 21 have a single contact point.

In one embodiment of the pressing device 1, the force exerted by the holders 2 on the battery cells 11 in the stacking direction is determined based on the geometry of the rigid track 20 and the stiffness of the elastic section 21. As shown in figure 6, due to the pressure exerted by the at least one battery cell 11 on the two holders 2 between which it is arranged when said battery cell 11 swells, such that at the contact point between the elastic section 21 and the rigid track 20 of the joints between both holders 2 a force is generated which can be decomposed into two components, a first component in the stacking direction, and a second component in the direction perpendicular thereto. Thus, for the same force generated at the contact point between the elastic section 21 and the rigid track 20, depending on the geometry of the rigid track 20, it is possible to control the component of said force in the stacking direction, thereby controlling the pressure that the holders 2 exert on the battery cells 11 in said direction.

Thus, as the thickness of the battery cells 11 increases or decreases, the greater the angle α that the slope of the rigid track 20 has at each of its points with respect to the stacking direction of the battery cells 11, the greater the component of the force exerted on the battery cells 11 in said stacking direction when said elastic section 21 makes contact with the rigid track 20 at said point, and vice versa.

In the context of the invention the stiffness of the elastic section is defined as the measure of the resistance of the elastic section 21 to deformation under a force applied to it.

In one embodiment of the pressing device 1, the stiffness of the elastic section 21 depends on its deformation. Thus, the stiffness of the elastic section 21 may remain constant from a first level of deformation to a second level of deformation thereof, or it may be variable, so that depending on the level of deformation of the elastic section 21 at a given moment, the force required to deform it further may have to be greater and greater, or conversely, smaller and smaller. Likewise, the stiffness of the elastic section will depend on the material of which said elastic section is made and the geometry of said elastic section 21.

In a preferred embodiment of the invention, the elastic sections 21 are made of a material with a high ratio between the elastic limit thereof and its Young's modulus. Examples of such materials include polymers, fibre reinforced polymers, composites, titanium alloys, some elastomers, etc.

In a preferred embodiment of the invention, the holders 2 are made of the same material as the elastic sections 21.

In one embodiment of the invention, the elastic sections 21 are configured to, in use, deform up to a maximum level of deformation. Above a determined maximum level of deformation, the behaviour of the elastic section 21 may not be as desired, therefore, the elastic sections 21 are configured to, in use, deform up to said maximum level of deformation.

In one embodiment of the invention, the elastic sections 21 are configured to, in use, deform from a minimum level of deformation. Below a determined minimum level of deformation, the behaviour of the elastic section 21 may not be the desired one for the pressing device 1, therefore, in an embodiment of the invention, when the pressing device is mounted on a battery cell stack, the elastic sections 21 are pre-stressed, i.e. they have a minimum level of deformation, above which, their stiffness is the desired one for the pressing device 1.

By means of the pressing device 1 of the invention, the force exerted on each battery cell 11 or group of battery cells 11 arranged between each two adjacent holders 2 can be controlled. Thus, in the case where a single battery cell 11 is arranged between each two adjacent holders 2, the pressing device 1 of the invention makes it possible to individually control the pressure exerted on each of the battery cells 11 depending on the thickness of said battery cell 11 at a given time, thereby improving the efficiency of the battery cell stack as a whole.

In one embodiment of the pressing device 1 of the invention, the force exerted on the battery cells 11 arranged between each two holders 2 is constant during the life cycle of said battery cells 11.

In another embodiment of the pressing device 1 of the invention, the force exerted on the battery cells 11 arranged between each two holders 2 is variable during the life cycle of said battery cells 11.

In another embodiment of the pressing device 1 of the invention, the force exerted on the battery cells 11 arranged between each two holders 2 is greater the greater the width of said battery cells 11.

In another embodiment of the pressing device 1 of the invention, the force exerted on the battery cells 11 arranged between each two holders 2 is smaller the greater the width of said battery cells 11.

In one embodiment of the pressing device 1, each projection 8 comprises two side extensions 6, each side extension 6 comprising an elastic section 21, and the open contour 72 of each housing 7 comprising two side sections 73 converging at the inlet opening 71, at least part of each side section 73 constituting a rigid track 20.

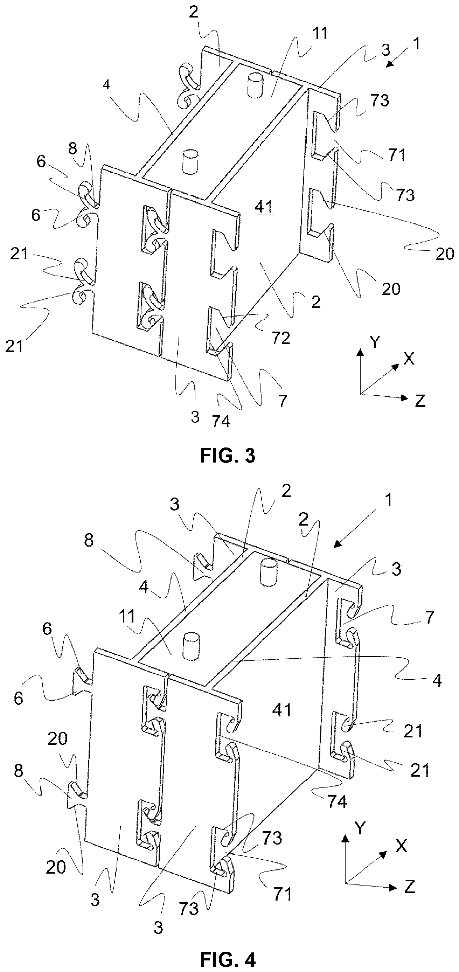

Figure 3 shows part of a third embodiment of the pressing device 1 of the invention. Although figure 3 shows only two holders 2 and one battery cell 11 arranged between both holders 2, the pressing device 1 is configured to have as many holders 2 as necessary, with at least one battery cell 11 arranged between each two holders 2. The battery cell 11 shown in the figure is of the prismatic type, although the embodiment of the pressing device 1 shown in said figure can also be used with battery cells 11 of the pouch type.

In the embodiment of figure 3, the open contour 72 of each housing 7 comprises two side sections 73 converging at the inlet opening 71, and a front section 74 between both side sections 73, such that at least part of each side section 73 constitutes the rigid track 20. In the embodiment of figure 3 each projection 8 comprises two side extensions 6, each side extension 6 comprising an elastic section 21.

In one embodiment of the pressing device 1, the side extensions 6 of the projections 8 are arms comprising a respective elastic section 21, and the side sections 73 of the housings 7 comprise a respective rigid track 20.

In the embodiment of figure 3, each side extension 6 of each projection 8 is an arm comprising the elastic section 21. Each arm comprises an end by means of which it is held attached to the holder 2, and a free end. Furthermore, at least part of each side section 73 of the respective housing 7 constitutes a rigid track 20. The free end of each arm rests against the respective rigid track 20, such that as the thickness of the battery cells 11 increases, said end slides along said rigid track 20 towards the inlet opening 71. At the same time, the arms deform. In the embodiment of figure 3 the arms are curved arms, such that as they deform as the thickness of the battery cells 11 increases, the radius of curvature of the arms increases.

In one embodiment of the pressing device 1, each projection 8 comprises two side extensions 6, each side extension 6 comprising a rigid track 20, and the open contour 72 of each housing 7 comprising two side sections 73 converging at the inlet opening 71, at least part of each side section 73 constituting an elastic section 21.

Figure 4 shows part of a fourth embodiment of the pressing device 1 of the invention. Although figure 4 shows only two holders 2 and one battery cell 11 arranged between both holders 2, the pressing device 1 is configured to have as many holders 2 as necessary, with at least one battery cell 11 arranged between each two holders 2. The battery cell 11 shown in the figure is of the prismatic type, although the embodiment of the pressing device 1 shown in said figure can also be used with battery cells 11 of the pouch type.

In the embodiment of figure 4, at each joint between two adjacent holders 2, the open contour 72 comprises two side sections 73 converging at the inlet opening 71, and a front section 74 between both side sections 73, such that at least part of each side section 73 constitutes an elastic section 21. In such an embodiment, each projection 8 comprises two side extensions 6, each side extension 6 comprising a rigid track 20.

In one embodiment of the pressing device 1, part of the side sections 73 of the housings 7 are flanges constituting a respective elastic section 21, and the side extensions 6 of the projections 8 comprise a respective rigid track 20.

In the embodiment of figure 4, the part of each side section 73 constituting the elastic section 21 is a flange. Each flange comprises an end by means of which it is held attached to the holder 2, and a free end. The free end of each flange rests against the respective rigid track 20, such that as the thickness of the battery cells 11 increases, said end slides along the respective rigid track 20, deforming as it slides.

In a preferred embodiment of the invention, the two side extensions 6 of each projection 8 and the two side sections 73 of the respective housing are symmetrical with respect to a plane perpendicular to said side extensions 6 and said side sections 73, said plane being arranged between both side sections 73 and both side extensions 6.

In one embodiment of the pressing device 1, the rigid track 20 is a straight track. The embodiments of figures 1 to 5 show straight rigid tracks 20.

In another embodiment of the pressing device 1, the rigid track 20 is a curved track.

In one embodiment of the pressing device 1, each holder 2 comprises two coupling plates 3 facing each other and arranged one on each side of the battery cell stack, each coupling plate 3 comprising at least one housing 7 on a first side 31 of the coupling plate 3, and at least one projection 8 on a second side 32 of the coupling plate 3. The battery cell stack comprises two equal faces arranged at its ends, and four side faces which are arranged facing each other two by two, such that a coupling plate 3 of a holder 2 is arranged next to one side face of the battery cell stack, and the other coupling plate 3 of said holder is arranged next to the side face facing the former, as shown in figures 1 to 4. The holders 2 arranged at the ends of the battery cell stack may be different, as they only have another holder 2 adjacent to one of their sides and not the other. Thus, said end holders 2 will comprise housings or projections on only one of the sides, as appropriate.

In one embodiment of the pressing device 1, each holder 2 comprises a support plate 4 arranged perpendicularly with respect to the coupling plates 3 and between both coupling plates 3, the support plate 4 comprising two support surfaces 41 such that one support surface 41 is in physical contact with one battery cell 11 and the other support surface 41 is in physical contact with another battery cell 11.

In one embodiment of the pressing device 1, each holder 2 comprises two connecting plates 5 arranged perpendicularly with respect to the coupling plates 3, between both coupling plates 3, and the connecting plates being facing each other and arranged one on each side of the battery cell stack, such that the battery cells 11 are arranged in the space enclosed by the coupling plates 3 and the connecting plates 5, as shown in figure 5. In one embodiment of the pressing device 1, at least one of the connecting plates comprises at least one hole configured for at least one terminal of a battery cell 11 to pass through said hole, thereby allowing the terminal to be accessible from the outside of the pressing device 1.

The invention also relates to a battery comprising a battery cell stack comprising a plurality of prismatic or pouch-type battery cells 11 and a pressing device 1 according to the invention.

## Claims

1. Pressing device for a battery cell stack comprising a plurality of prismatic or pouch-type battery cells (11) which are arranged stacked in a stacking direction, the pressing device (1) comprising a plurality of holders (2) arranged consecutively in the stacking direction, such that at least one battery cell (11) is arranged between every two holders (2), **characterised in that** the holders (2) move apart or move closer together with an increase or a decrease in the thickness of the battery cells (11) in the stacking direction, the holders (2) being coupled together by means of joints formed by a projection (8) arranged in one of the holders (2) and a housing (7) arranged in the adjacent holder (2), the housing (7) comprising an inlet opening (71) and an open contour (72), the projection (8) being housed in the housing (7), and the projection (8) or the open contour (72) of the housing (7) comprising at least one elastic section (21) that allows the holders (2) to move apart and to move closer together, the projections (8) and the housings (7) being configured so that the holders (2) exert a determined force on the battery cells (11) in the stacking direction.

2. Pressing device according to claim 1, wherein the open contour (72) of the housing (7) comprises a rigid track (20) and the respective projection (8) comprises the elastic section (21), or wherein the open contour (72) of the housing (7) comprises the elastic section (21) and the respective projection (8) comprises the rigid track (20), the elastic section (21) being configured so that a free end thereof slides along the rigid track (20) when the holders (2) move apart or move closer together, and to deform as it slides.

3. Pressing device according to claim 2, wherein the rigid track (20) is arranged at an angle of less than 90° to the stacking direction, said rigid track (20) being configured to cause the deformation of the elastic section (21) when the holders (2) move apart or move closer together.

4. Pressing device according to claim 2 or 3, wherein the rigid track (20) and the respective elastic section (21) have a single contact point.

5. Pressing device according to claim 4, wherein the force exerted by the holders (2) on the battery cells (11) in the stacking direction is determined based on the geometry of the rigid track (20) and the stiffness of the elastic section (21).

6. Pressing device according to claim 5, wherein the stiffness of the elastic section (21) depends on its deformation.

7. Pressing device according to any of claims 2 to 6, wherein each projection (8) comprises two side extensions (6), each side extension (6) comprising a rigid track (20) or an elastic section (21), and the open contour (72) of each housing (7) comprising two side sections (73) converging at the inlet opening (71), at least part of each side section (73) constituting an elastic section (21) or a rigid track (20).

8. Pressing device according to claim 7, wherein the side extensions (6) of the projections (8) are arms comprising a respective elastic section (21), and the side sections (73) of the housings (7) comprise a respective rigid track (20).

9. Pressing device according to claim 7, wherein part of the side sections (73) of the housings (7) are flanges constituting a respective elastic section (21), and the side extensions (6) of the projections (8) comprise a respective rigid track (20).

10. Pressing device according to any of claims 2 to 9, wherein the rigid track (20) is a straight track.

11. Pressing device according to any of claims 2 to 9, wherein the rigid track (20) is a curved track.

12. Pressing device according to any of the preceding claims, wherein each holder (2) comprises two coupling plates (3) facing each other and arranged one on each side of the battery cell stack, each coupling plate (3) comprising at least one housing (7) on a first side (31) of the coupling plate (3), and at least one projection (8) on a second side (32) of the coupling plate (3).

13. Pressing device according to claim 12, wherein each holder (2) comprises a support plate (4) arranged perpendicularly with respect to the coupling plates (3) and between both coupling plates (3), the support plate (4) comprising two support surfaces (41), such that one support surface (41) is in physical contact with one battery cell (11) and the other support surface (41) is in physical contact with another battery cell (11).

14. Pressing device according to claim 13, wherein each holder (2) comprises two connecting plates (5) arranged perpendicularly with respect to the coupling plates (3), between both coupling plates (3), and the connecting plates being facing each other and arranged one on each side of the battery cell stack, such that the battery cells (11) are arranged in the space enclosed by the coupling plates (3) and the connecting plates (5).

15. Battery comprising a battery cell stack comprising a plurality of battery cells (11) of prismatic or pouch type and a pressing device (1) according to any of the preceding claims.
